# EUROPEAN PATENT APPLICATION

(11) **EP 1 338 962 A2**
(43) Date of publication of application: **27.08.2003**
(21) Application number: 02360356.6
(22) Date of filing: 17.12.2002
(51) Int. Cl.: G06F 9/445

(54) **Installation server**

(30) Priority: 14.02.2002 DE 10206000
(71) Applicant: ALCATEL, 75008 Paris (FR)
(72) Inventor: Daase, Detlef, 12205 Berlin (DE); Althainz, Bettina, 12157 Berlin (DE); Böhme, Jens, 10781 Berlin (DE); Müller, Irina, 12555 Berlin (DE)
(74) Representative: Brose, Gerhard

(57) **Abstract**

The invention relates to a process for installation of a first program code (P1, P2, P3) on a server (NE1 to NE9) which is connected via a communication network (KN) with an installation server (NMS) and on which a second program code is already installed. The invention further relates to the server (NE1 to NE9) and the installation server (NMS) for performance of this process. A first data set (D1) containing the first program code (P1, P2, P3) is sent by the installation server (NMS) via the communication network (KN) to the server (NE1 to NE9). A second data set (D2) containing a test code (PT1, PT2, PT3) for the first program code (P1, P2, P3) to be installed is sent by the installation server (NMS) via the communication network (KN) to the server (NE1 to NE9). Before integration of the first program code (P1, P2, P3) in the second program code (PC2), the server (NE1 to NE9) by means of the test code (PT1, PT2, PT3) checks the second program code (PC2) on the server to establish whether it is compatible with the first program code (P1, P2, P3). Only if the result of this check is positive does the server (NE1 to NE9) integrate the first program code (P1, P2, P3) in the second program code (PC2) already on the server.

## Description

The invention concerns a process for installation of a first program code on a server which is connected via a communication network with an installation server and on which a second program code is already installed. In this process a first data set containing the first program code is sent from the installation server to the server via the communication network. The first program code is then integrated in the second program code already on the server. The invention further concerns a server and an installation server for performance of the process.

The invention arises from the process normally used in telecommunications technology for the installation of "patches".

"Patches" are small software packets which must be installed on a multiplicity of network elements of a telecommunication network to correct errors or improve performance. These "patches" are loaded onto the network elements by the operator of the telecommunication network. They can then be installed in the software of the network elements by means of remote access by the operators.

The disadvantage of this process is that it is very time-consuming and requires a high training level of the network operator.

The invention is now based on the object of improving the installation of program code on servers on which program code is already installed.

This object is achieved by a process for installation of a first program code on a server according to the teaching of claim 1. The object is further achieved by a server according to the teaching of claim 10. The object is further achieved by an installation server to support the installation of a first program code according to the teaching of claim 12.

The invention is based on the concept of transmitting to the server together with the program code to be installed on the server a specific test code for this program code. Before the program code is automatically integrated by the server on the software already on the server, the compatibility between the software on the server and the program code is checked by means of the specific test code. The server then integrates the program code into the software already on the server only if the end result of the test is positive.

This approach firstly brings the advantage that the program code can be distributed for installation to a multiplicity of servers in which the specific current software installation is not uniform. The process according to the invention avoids errors occurring in the installation of the program code. It is possible to automate largely or completely the actual integration of the program code in the software on the server. It is firstly possible to use network operators with lower training levels and reduce the network operator time necessary for installation. Secondly the availability of the entire system is increased. Errors in software installation are largely prevented by the process according to the invention. Therefore it is particularly suitable for use in areas where a high level of security and availability is required.

A further advantage is that the installation of program code in a multiplicity of servers is made more flexible. The individual software installation of these servers needs no longer to be essentially uniform. This simplifies the administration of the entire system.

Advantageous embodiments of the invention are given in the sub-claims.

It is advantageous to transmit to the server, together with the program code and test code, an installation code for the program code to be installed. The installation code here shows how the program code should be integrated into the software already on the server. This further increases the flexibility of the installation process.

It is further advantageous not to fully automate the installation of the program code on the server but to only activate the integrated program code upon a command of the network operator. Thus the final decision remains with the network operator and the security of the entire system is increased.

Furthermore it is advantageous to transmit the program code to the server in compressed form. This reduces the bandwidth necessary for the transfer of the program code.

Furthermore it is advantageous to store the program code on the server before and after the integration of the program code transmitted. By means of this back-up strategy it is possible to avoid the need for an uninstall routine and reduce the amount of local memory necessary for back-up.

Furthermore it is advantageous, in an installation server controlling the program code installation, to store a distribution list describing the installation state of the network elements. By means of this distribution list it is possible to make a preselection of the servers to which the program code is sent to be installed. This further increases the level of security and efficiency of the entire system.

It is naturally also possible to use the invention not only for the installation of program code on elements of a telecommunication network. The invention rather is generally suitable for the installation of program code on servers on which software is already installed. It is therefore suitable for use in any computer system.

The invention is described in more detail below with reference to several embodiment examples and the enclosed drawings as an example.
- Fig. 1: shows a block diagram of the system with an installation server according to the invention and a multiplicity of servers according to the invention.
- Fig. 2: shows a functional view of the installation server according to fig. 1 and a server according to fig. 1.

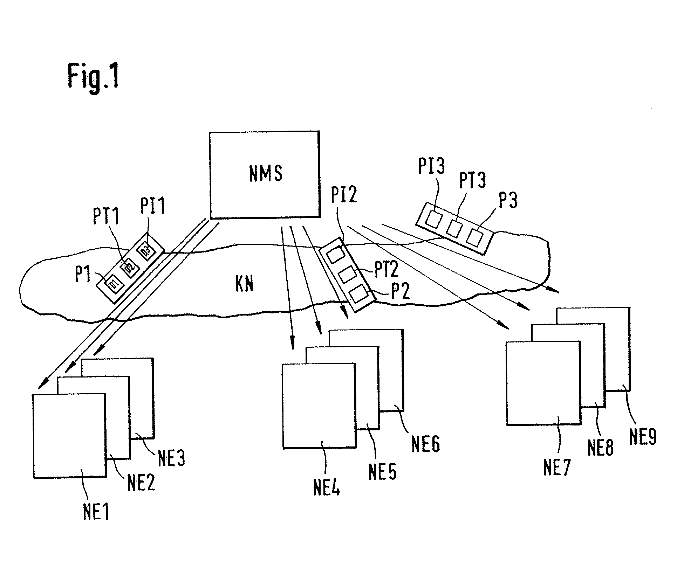

Fig. 1 shows an installation server NMS, a communication network KN and several servers NE1 to NE9.

The communication network KN is a data network. This is for example a LAN (local area network) based on Ethernet protocol. The communication network KN can also be a MAN (metropolitan area network) or ATM (asynchronous transfer mode)-based network. It is also possible that the communication network KN consists of several sub-networks. Such sub-networks can be based on different transport protocols or be allocated to different network operators. The connecting layer here can be a TCP/IP protocol stack (TCP = transmission control protocol, IP = Internet protocol). It is further possible that the communication network KN is a signalling network of a telecommunication network.

The installation server NMS controls the installation of program code on servers NE1 to NE9. The server NMS can also be a server of the network management system of a telecommunication network. It is also possible that the installation server NMS is a server within a computer system which is used to manage the computer system.

Servers NE1 to NE9 are servers on which program code is to be installed. The number of servers NE1 to NE9 is selected as an example. On each of the servers NE1 to NE9 a program code is already installed. The program code installed can vary here from server to server.

Servers NE1 to NE3, NE4 to NE6 and NE7 to NE9 each form a group of servers which have a similar software installation.

Servers NE1 to NE9 are each connected with the communication network KN. The installation server NMS is also connected with the communication network KN. Both the installation server NMS and servers NE1 to NE9 also have means (corresponding interface cards and software drivers) to communicate with each other via the communication network KN. In this sense the installation server NMS and servers NE1 to NE9 are connected together via the communication network KN.

It is also possible that one of the servers NE1 to NE9 or the installation server NMS is connected with the communication network KN via an air interface, for example a radio connection.

Different program codes are already installed on servers NE1 to NE3. To install a program code P1 on servers NE1 to NE3, the installation server NMS sends to the servers NE1 to NE3 via the communication network KN a first data set D1 containing the program code P1. The installation server NMS also sends to the servers NE1 to NE3 via the communication network KN a data set D2 containing a test code PT1 for the program code P1 to be installed.

It is also possible that the installation server NMS sends to servers NE1 to NE3 via the communication network KN a data set 3 containing an installation code PI1 for the program code P1 to be installed. The installation code PI1 is used by servers NE1 to NE3 to integrate program code P1 according to this installation code PI1 in the program code already on the server concerned. Naturally the transmission of data set D3 could also be omitted. Servers NE1 to NE3 could for example contain an independent logic which determines how the program code P1 is to be integrated in the program code already on the servers NE1 to NE3.

Upon receipt of data set D1 and D2, servers NE1 to NE3 perform the following process:

Before integration of program code P1 in the program code already on the respective server, the server NE1 to NE3 by means of the test code PT1 checks if the program code already on the server is compatible with the first program code. Only if the result of the check is positive, i.e. if the program code already on the server appears compatible with the program code P1, does the server concerned integrate the program code P1 into the code already on the server.

Similarly, for installation of program code P2, the installation server NMS sends data sets with program code P2, a test code TP2 and an installation code PI2 to servers NE4 to NE6. For installation of a program code P3 the installation server NMS sends data sets with the program code P3, a test code PT3 and an installation code PI3 to servers NE7 to NE9.

The detailed structure and function of an installation server according to the invention and a server according to the invention are clarified below by means of the function of the installation server NMS and server NE1.

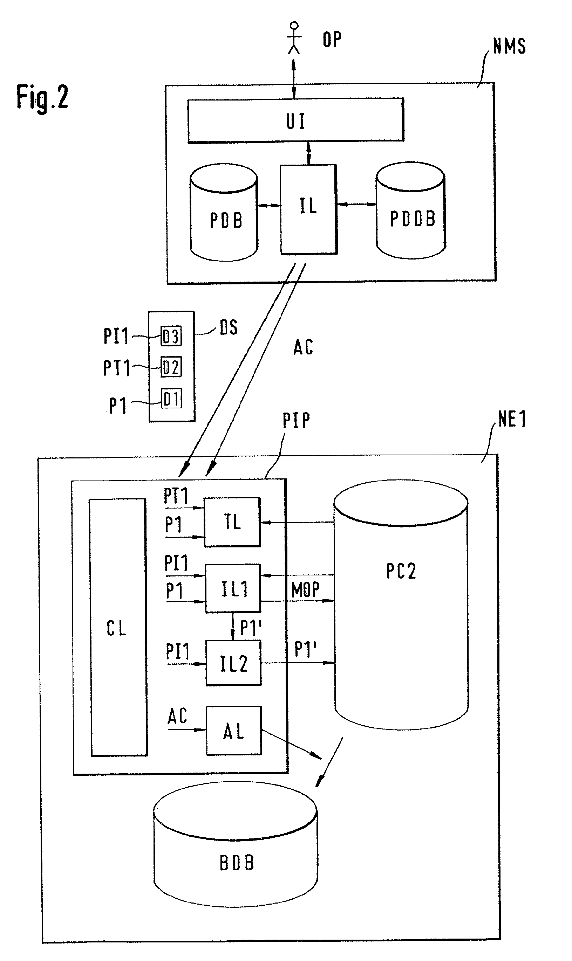

Figure 2 shows the installation server NMS and server NE1.

The installation server NMS consists of one or more computers connected together, the software platform to be installed on these computers, and application programs to be run on these software platforms. In the execution of these application programs on the system platform of the installation server NMS, the functions described below of the installation server NMS are performed.

Functionally the installation server NMS has a user interface UI, a control unit IL and two memory units PDB and PDDB.

User interface UI permits the communication with a network operator OP or a system administrator. It is advantageous that the user control takes place via a graphical user interface.

Memory unit PDB is a database or data structure provided on the system platform of the installation server NMS. The memory unit PDB contains program codes to be installed and allocated test codes and installation codes. In addition further data can be allocated to each stored program code. This data concerns for example information related to the type of server on which the stored program code can be installed, data related to the function of the stored program code, data related the date of production and organisation which produced the program code or data related to the program code authorisation.

Program code in this sense is, firstly, an executable code, for example object code or libraries, or code to be interpreted, for example Java Applets. Secondly, program code in this context includes configuration files, data describing information to be shown or other data constituting input data for computer programs and influencing their function.

Within memory unit PDB is for example stored a list, where each of the lines is allocated to one of the program codes P1, P2 and P3, and the columns of which contain the program code, test code, installation code and other data. It is naturally also possible to structure this data differently within the memory unit PDB. For example it is possible to organise program codes, allocated test codes, allocated installation code and other allocated data by means of a linked list.

Memory unit PDDB can be structured in the same way as memory unit PDB. Memory unit PDDB has a distribution list describing the installation state of servers NE1 to NE9. The distribution list can, firstly, comprise a distribution matrix describing which program codes stored in the memory unit PDB are already installed on which servers NE1 to NE9. The distribution list can further contain details of the program codes already installed on servers NE1 to NE9. For example the distribution list can contain information about which programs are at present installed on which servers NE1 to NE9. The distribution list can also contain information describing the system properties of servers NE1 to NE9.

Control unit IL controls the installation of program codes on servers NE1 to NE9. The function of the control unit IL is here performed by application programs running on the system platform of the installation server NMS.

If the control unit IL receives via the user interface UI a command to install program code P1 on servers NE1 to NE3, it arranges the transmission of the data set D1 containing program code P1 via the communication network KN to servers NE1 to NE3. Data set D1 is here sent to servers NE1 to NE3 together with a special command. This command tells the servers NE1 to NE3 that data set D1 serves for integration of program code P1 in the program code already on the server NE1 to NE3 concerned. The control unit IL further arranges that the data set D2, containing the test code PT1 for the program code P1 to be installed, is transmitted via the communication network KN to servers NE1 to NE3.

The test code PT1 transmitted here is designed so that the servers NE1 to NE3 can by this means check if the program code already on the servers NE1 to NE3 prior to the integration of the program code P1, is compatible with program code P1.

During this check the test code PT1 can check the program code already on the server concerned to establish whether certain programs or program versions are present and their configuration complies with the requirements of program code P1. Furthermore it is also possible that the test code PT1 contains one or more executable test programs, the execution of which generates on the server concerned a result by means of which it can be checked whether the necessary peripheral conditions are present for program code P1. Here it is also possible that test code PT1 contains information for the interpretation of the result of such test programs.

Further it is also possible that test code PT1 contains information about specific preliminary conditions to be fulfilled by a server in order to guarantee the compatibility of program code P1. By means of the test code the server then checks the program code on the server to establish whether the server fulfils such specific preliminary conditions.

Control unit IL further arranges the transmission of data set D3 via communication network KN to servers NE1 to NE3. Data set D3 contains the installation code TI1 for the program code P1 to be installed. Installation code PI1 is here structured so that it supports the relevant servers NE1 to NE3 in the integration of the program code P1 into the program code already on the server concerned. The installation code PI1 contains specific instructions on how the program code P1 is to be integrated into the program code already on the relevant server. Such instructions can concern the integration of program code P1 into the program code already on the server and also concern any necessary adaptation of the program code P1 or the program code already on the server.

It is possible that the control unit IL arranges the transmission of data sets D1, D2 and D3 to servers NE1 to NE3 within a complete packet DS. It is also possible that data sets D1, D2 and D3 are sent together with the relevant control instructions as individual packets to the servers NE1 to NE3.

It is advantageous that the control unit IL compresses program code P1 before transmission and data set D1 thus contains program code P1 in compressed form. Naturally it is also possible that program code P1 is already stored in the memory unit PDDB in compressed form. Furthermore it is advantageous that the data sets D1, D2 and D3 present in the packet DS are compressed jointly.

It is possible that control unit IL is not instructed by the network operator OP via the user interface UI to send the program code P1 to servers NE1 to NE3. It is also possible that the control unit IL by means of access to the data of memory unit PDDB independently selects those servers to which the program code P1 must be sent. For example, the control unit IL can select the servers of the same type, for which the installation of program code P1 is necessary or useful for its function. Thus the network operator does not need to make the detailed selection of servers on which program code P1 is to be installed. The control unit IL can also make a preselection for the network operator showing to which server which program code present in the memory unit PDB should be sent for installation.

Server NE1 is for example a network element of a telecommunication network. It is particularly advantageous if server NE1 is a billing server of a telecommunication network. For such billing servers a very high level of operating reliability is required, so that the use of the invention on such servers is particularly advantageous.

Server NE1 consists of a computer and the software to be placed on this computer. The computer has an interface unit for communication with the installation server NMS via the communication network KN. Such an interface unit consists for example of a socket or radio component by means of which communication is possible with the communication network KN.

When the software is run on the computer the functions described below of server NE1 are performed. A part of this software is a program which supports the installation of the program code on the system platform of server NE1. Functionally this program constitutes an installation unit PIP. Server NE1 further has a program code PC2 already installed on the server and a memory unit BDB.

Program code PC2 can comprise the entire software of server NE1. It is naturally also possible that program code PC2 only comprises running programs or parts of running programs of the server NE1. For example it is possible that program code PC2 does not include the program forming the installation unit PIP and the program of the software platform of server NE1. Program code PC2 can comprise data as well as running programs.

Memory unit PDB serves to secure the data of server NE1. Memory unit BDB is for example a hard disk drive, a tape drive or an optical memory.

The installation unit PIP has several function units CL, TL, IL1, IL2 and AL. Each function unit performs a special function within the program forming the installation unit PIP.

The installation unit PIP receives from installation server NMS via communication network KN the data set D1 containing program code P1. The installation unit PIP also receives from the installation server NMS via communication network KN the data set D2 containing the test code PT1 for the program code P1 to be installed. The function unit TL checks the program code PC2 on server NE1 by means of test code PT1 to establish whether it is compatible with program code P1.

The function unit CL co-ordinates the functions of function units TL, IL1, IL2 and AL. If the installation server NMS receives an instruction with data sets D1 and D2 instructing the installation of the program code contained in data set D1 on server NE1, the function unit CL instructs the function unit TL by means of program code P1 and test code PT1 to check the compatibility of program code P1 with program code PC2. The result of this check is given to the function unit CL by the function unit TL. If the result of the check is positive, i.e. there is compatibility, the function unit CL instructs the function units IL1 and IL2 to integrate program code P1 into program code PC2. If the result is negative, the function unit CL prohibits the integration of the program code P1 in program code PC2. In this case it is also advantageous that the function unit CL arranges the transmission of a corresponding message to the installation server NMS.

The compatibility is checked by the function unit TL using the possibilities specified above. Thus for example the conditions specified in the test code PT1 are checked when the program code PC2 is tested for compliance with these conditions. Furthermore it is possible that a test program specified in test code PT1 is run and the result of this test program is compared with analysis information present in test code PT1. It is also possible that the program code P1 or parts of the program code P1 are run in a monitored state and the result analysed by means of a test pattern contained in the test code.

Function units IL1 and IL2 control the integration of program code P1 into program code PC2. Function units IL1 and IL2 integrate the program code P1 according to the installation code PI1 into the program code PC2 already on the server NE1. It is also possible that the function units IL1 and IL2 perform this integration on the basis of an independent logic without the aid of the installation code PI1. This however has the disadvantage that the installation of program code PI cannot be adapted to the specific requirements of program code PC2.

The function unit IL1 adapts the program code P1 to the program code PC2 according to the installation code PI1. On the basis of information on program code PC2 and the instructions of the installation code PI1, the function unit IL1 then changes the program code P1 into the program code P1'. Further it is also possible that function unit IL1 changes the program code PC2 according to the installation code PI1 for adaptation to program code P1. On the basis of information on program code PC2 and the instructions from installation code PI1, the function unit IL1 thus performs modifications MOD in program code PC2.

Function unit IL2 inserts the modified program code P1' into the program code P2 according to the installation code PI1. Here it is also possible that for insertion by function unit IL2 further information on program code P2 is determined. This information is then analysed according to the instructions of installation code PI1.

In the integration by function units IL1 and IL2 of program code P1' in program code PC2 already on the server, part of the program code PC2 is replaced by program code P1. It is also possible that in this integration, program code P1' is added to program PC2.

Function unit AL activates the integration of program code P1 in program code PC2 by function units IL1 and IL2. For example the changes made by function units IL1 and IL2 only become active on a new system start. The function unit AL in this case arranges the activation of the integration by arranging a restart of the system. Function unit AL activates the integration of the integrated program code only upon a command from the installation server NMS. So function unit AL activates integration for example only when server NE1 receives a command AC from installation server NMS.

Function unit AL also controls the storage of program codes PC2 in memory unit PDB. It arranges storage of program code PC2 before integration of program code P1 and after integration of program code P1. It is also possible that the function unit AL arranges the storage of program code PC2 before activating the integration of program code P1 into program code PC2 and after activating this integration.

## Claims

1. Process for installation of a first program code (P1, P2, P3) on a server (NE1 to NE9) which is connected via a communication network (KN) with an installation server (NMS) and on which is already installed a second program code (PC2), where in the process
- the installation server (NMS) sends to servers (NE1 to NE9) via the communication network (KN) a first data set (D1) containing the first program code (P1, P2, P3) and
- the first program code (P1, P2, P3) is integrated in the second program code (PC2) already on the server (NE1 to NE9),
**characterised in that**
- the installation server (NMS) sends to the servers (NE1 to NE9) via the communication network (KN) a second data set (D2) containing a test code (PT1, PT2, PT3) for the first program code (P1, P2, P3) to be installed,
- before integration of the first program code (P1, P2, P3) in the second program code (PC2), the server (NE1 to NE9) by means of the test code (PT1, PT2, PT3) checks the program code (PC2) on the server to establish whether it is compatible with the first program code (P1, P2, P3), and
- the server (NE1 to NE9) integrates the first program code (P1, P2, P3) in the second program code (PC2) already on the server if the result of the check is positive.

2. Process according to claim 1, **characterised in that**
- the installation server (NMS) sends to the server (NE1 to NE9) via the communication network (KN) a third data set (D3) containing the installation code (PI1, PI2, PI3) for the first program code (P1, P2, P3) to be installed, and
- the server (NE1 to NE9) integrates the first program code (P1, P2, P3) in the program code (PC2) already on the server in accordance with this installation code (PI1, PI2, PI3).

3. Process according to claim 1, **characterised in that** the server (NE1) adapts the first program code (P1) to the second program code (PC2) in accordance with the installation code (PI1).

4. Process according to claim 1, **characterised in that** the server (NE1) inserts the first program code (P1) in the second program code (PC2) in accordance with the installation code (PI1).

5. Process according to claim 1, **characterised in that** the server (NE1) modifies the second program code (PC2) according to the installation code (PI1) for adaptation to the first program code (P1).

6. Process according to claim 1, **characterised in that** on integration of the first program code (P1) in the second program code (PC2) already on the server, the server (NE1) replaces part of the second program code (PC2) with the first program code (P1).

7. Process according to claim 1, **characterised in that** the server (NE1) activates the integrated first program code upon a command (AC) by the installation server (NMS).

8. Process according to claim 1, **characterised in that** before integration of the first program code (P1) in the second program code (PC2), by means of the test code (PT1) the server (NE1) checks the second program code (PC2) on the server (NE1) to establish whether the server (NE1) fulfils one or more specific preconditions.

9. Process according to claim 1, **characterised in that** the first data set (D1) contains the first program code (P1) in compressed form.

10. Server (NE1 to NE9) with an interface unit for communication with an installation server (NMS) via a communication network (KN) and with an installation unit (PIP) for installation of the first program code (P1, P2, P3) on the server (NE1 to NE9) where the installation unit (PIP) is structured so that it receives from the installation server (NMS) via the communication network (KN) a first data set (D1) containing the first program code (P1, P2, P3), **characterised in that** the installation unit (PIP) is further designed so that it receives from the installation server (NMS) via the communication network (KN) a second data set (D2) containing a test code (PT1, PT2, PT3) for the program code (P1, P2, P3) to be installed, that before integration of the first program code (P1, P2, P3) in the second program code (PC2), by means of the test code (PT1, PT2, PT3) it checks the second program code (PC2) on the server (NE1 to NE9) to establish whether it is compatible with the first program code (P1, P2, P3), and that if the result of the check is positive, it integrates the first program code (P1, P2, P3) in the second program code (PC2) already on the server (NE1 to NE9).

11. Server (NE1) according to claim 10, **characterised in that** the installation unit (PIP) is further designed so that it arranges storage of the second program code (PC2) before and after integration of the first program code in the second program code.

12. Installation server (NMS) to support the installation of a first program code (P1, P2, P3) on one or more servers (NE1 to NE9), each of which is connected via a communication network (KN) with the installation server (NMS) and on which a second program code (PC2) is already installed, where the installation server (NMS) has a memory unit (PDB) to store the first program code (P1, P2, P3) and a control unit (IL) designed so that it arranges the sending of a first data set (D1) containing the first program code (P1, P2, P3) via the communication network (KN) to the server or servers (NE1 to NE9) for integration of the first program code (P1, P2, P3) in the second program code (PC2) already on the server (NE1 to NE9) concerned, **characterised in that** the control unit (IL) is further designed so that it arranges the sending of a second data set (D2) containing a test code (PT1, PT2, PT3) for the first program code (P1, P2, P3) to be installed, via the communication network (KN) to the server or servers (NE1 to NE9), where the test codes (PT1, PT2, PT3) are structured so that the respective server (NE1 to NE9) can by this means, before integration of the first program code (P1, P2, P3) in the second program code (PC2), check the second program code (PC2) on the server concerned to establish whether it is compatible with the first program code (P1, P2, P3).

13. Installation server (NMS) according to claim 12, **characterised in that** the control unit (IL) is further designed so that it arranges the sending of the first data set (D1) and the second data set (D2) to a multiplicity of servers (NE1 to NE3) of the same type.

14. Installation server (NMS) according to claim 12, **characterised in that** the test code (PT1) is further designed so that different servers (NE1 to NE3) with different second program codes can by means of the test code (PT1) check the respective second program code, before integration of the first program code (P1) in the second program code concerned, to establish whether it is compatible with the first program code (P1).

15. Installation server (NMS) according to claim 12, **characterised in that** the control unit (IL) is further structured so that it arranges the sending of the first data set (D1) and the second data set (D2) to a multiplicity of network elements (NE1 to NE3) of a telecommunication network.

16. Installation server (NMS) according to claim 12, **characterised in that** the control unit (PIP) is further structured so that it is equipped with a second memory unit (PDDB) to store a distribution list describing the installation status of the servers (NE1 to NE9).
